# EUROPÄISCHE PATENTANMELDUNG

(11) **EP 0 818 945 A2**
(43) Veröffentlichungstag der Anmeldung: **14.01.1998**
(21) Anmeldenummer: 97111294.1
(22) Anmeldetag: 04.07.1997
(51) Int. Cl.: H05B 39/04

(54) **Elektronisches Stellgerät zum Steuern eines Laststromes**

(30) Priorität: 10.07.1996 DE 19627732
(71) Anmelder: ABB PATENT GmbH, 68309 Mannheim (DE)
(72) Erfinder: Torsten, Nolting, 58515 Lüdenscheid (DE)
(74) Vertreter: Rupprecht, Klaus, Dipl.-Ing.

(57) **Zusammenfassung**

Die Erfindung betrifft ein Elektronisches Stellgerät zum Steuern eines Laststromes, insbesondere einen Dimmer zum Einstellen der Helligkeit von Beleuchtungseinrichtungen oder einen Drehzahlsteller für Elektromotoren. Hierzu dient eine Funktionseinheit (2), die über einen Taster (1) bedienbar ist und entsprechend der Art der Betätigung des Tasters (1) und den hierdurch erzeugten Tastimpulsen ein bestimmtes Schaltverhalten vorgibt. Im ausgeschalteten Zustand des Stellgerätes bewertet sie einen durch eine kurze Tastung erzeugten kurzen Tastimpuls so, daß sie mit Hilfe einer Steuerelektronik (7) den Laststrom (10) auf den vor seinem Abschalten eingestellten Wert einstellt. Eine entsprechend länger anhaltende Tastung wird so bewertet, daß eine fortlaufende Änderung der Größe des Laststromwertes im Sinne einer Verkleinerung oder Vergrößerung des momentan eingestellten Laststromwertes erfolgt und hierbei der Stellbereich des Stellgerätes bis zur Beendigung der Tastung durchlaufen wird. Die hierzu benötigte Einstellzeit kann u. U. recht lang werden. Der Einstellvorgang wird erfindungsgemäß dadurch deutlich beschleunigt, daß die Funktionseinheit (2) so aufgebaut ist, daß sie zunächst die Zahl der pro Zeiteinheit ausgeführten kurzen Tastimpulse erfaßt und einer bestimmten Zahl von kurzen Tastimpulsen einen bestimmten Laststromwert zuordnet und erst dann der Steuerelektronik das hieraus resultierende Schaltverhalten vorgibt.

## Beschreibung

Die Erfindung betrifft ein elektronisches Stellgerät zum Steuern eines Laststromes, insbesondere einen Dimmer zum Einstellen der Helligkeit von Beleuchtungseinrichtungen oder einen Drehzahlsteller für Elektromotoren, nach dem Oberbegriff des Anspruchs 1.

Zur Betätigung von Stellgeräten sind derzeit zwei Bedienprinzipien bekannt, von denen eines mit Hilfe eines Drehknopfes die Einstellung des gewünschten Stellwertes, z. B. des die Helligkeit einer Beleuchtungseinrichtung oder die Drehzahl eines Motors bestimmenden Laststromes ermöglicht. Bei dem zweiten Bedienprinzip erfolgt das Steuern des Laststromes, mit einer Funktionseinheit, die über einen Taster bedienbar ist und aus der Art der Betätigung des Tasters ein bestimmtes Schaltverhalten ableitet. Dabei wird im eingeschaltetem Zustand des Stellgerätes eine kurze Tastschaltzeit so bewertet, daß sie den Laststrom auf den vor seinem Abschalten eingestellten Wert einstellt. Dagegen erfolgt während der Dauer einer entsprechend lange anhaltenden Tastschaltzeit eine entsprechende Änderung der Größe des Laststromwertes im Sinne einer zunehmenden Verkleinerung oder Vergrößerung des momentan eingestellten Laststromwertes, wobei der Stellbereich der Steuerelektronik fortschreitend durchlaufen wird.

Um bei dem zweiten Bedienprinzip mit Hilfe des Tasters von einem minimalen Laststrom zu einem maximalen Laststrom zu gelangen, wird relativ viel Zeit benötigt. Diese Zeit muß der Bediener am Stellgerät, z. B. einem Dimmer, verweilen, was durchaus als störend empfunden werden kann. Der Bedienkomfort läßt sich aber auch nicht dadurch steigern, daß man die Durchlaufzeit für den gesamten Stellbereich verringert, da sich dann Zwischenwerte nicht mehr ausreichend genau einstellen lassen.

Aufgabe der Erfindung ist es, ein elektronisches Stellgerät nach dem Oberbegriff des Anspruchs 1 zu schaffen, mit dem mindestens ein bestimmter, relativ häufig einzustellender Laststromwert in kurzer Zeit sehr genau eingestellt werden kann.

Diese Aufgabe wird durch die im Anspruch 1 gekennzeichneten Merkmale gelöst. Zweckmäßige Ausgestaltungen und Weiterbildungen des Erfindungsgegenstandes sind in den Unteransprüchen genannt.

Erfindungsgemäß wird die Funktionseinheit so aufgebaut, daß sie die Zahl der pro Zeiteinheit ausgeführten kurzen Tastungen erfaßt und einer bestimmten Zahl von Tastungen einen bestimmten Laststromwert zuordnet. Dadurch ist es möglich ohne Wartezeit durch eine Reihe mehrerer aufeinanderfolgender Tastimpulse unmittelbar einen bestimmten Laststrom vorzugeben und dadurch eine bestimmte Helligkeit bei einer Beleuchtungseinrichtung oder eine bestimmte Motordrehzahl zu erreichen. Die Vorgabe des als Stellwert dienenden Laststromes erfolgt erst nach der Auszählung. Bei nur einer Tastung pro Zeiteinheit wird die Weitergabe des Stellbefehls an die Steuerelektronik bis zum Ablauf der Zeiteinheit verzögert, damit eventuell noch folgende weitere Tastimpulse von der Funktionseinheit nicht ignoriert werden können.

Um Irrtümer zu vermeiden ist es zweckmäßig die Zahl der Tastimpulse pro Zeiteinheit möglichst gering zu halten. Eine bestimmte Ausgestaltung des Erfindungsgegenstandes sieht deshalb vor, daß die Funktionseinheit zwei kurze Tastungen pro Zeiteinheit so bewertet, daß sie daraufhin je nach Vorgabe den höchsten Laststrom oder einen vorgegebenen Standardwert einstellt.

Um mehrere vorher festgelegte Laststromwerte nach dem erfindungsgemäßen Prinzip einstellen zu können, ist es erforderlich, daß die Funktionseinheit eine Reihe von 3 + n (n = 0 bis x) kurzen Tastungen pro Zeiteinheit so bewertet, daß sie daraufhin einen von 1 + n (n = 0 bis x) vorgegebenen Standardwerten des Laststromes einstellt.

Um bestimmte Laststromwerte durch kurze Tastungen einstellbar zu machen, ist es möglich schon bei der Herstellung des Stellgerätes diese Werte vorzugeben. Der Bedienkomfort erhöht sich jedoch deutlich, wenn die Funktionseinheit mit einer Programmiereinrichtung versehen ist, die eine individuelle Vorgabe mindestens eines Standardwertes des Laststromes ermöglicht. Denn die Vorstellungen über eine besonders angenehme Beleuchtungsstärke sind individuell sehr unterschiedlich. Die Funktionseinheit muß hierzu mit einem Speicher zur Speicherung mindestens eines reproduzierbaren Laststromwertes versehen sein.

Zur individuellen Programmierung standardisierter Laststromwerte und deren Ablage im Speicher ist vorgesehen, daß zunächst in üblicher Weise ein bestimmter Wert des Laststromes über die Dauer einer entsprechend lange anhaltenden Tastschaltzeit eingestellt wird und anschließend eine Auslösung der Programmiereinrichtung diesen Laststromwert im Speicher fixiert. Zur Auslösung der Programmiereinrichtung kann ein zweiter Taster dienen, der zum Abspeichern betätigt wird.

Auf einen zweiten Taster kann jedoch verzichtet werden, wenn zur Auslösung der Programmiereinrichtung diese so aufgebaut ist, daß sie bei eingeschaltetem Stellgerät nach einer Reihe von 2 + n (n = 0 bis x), vorzugsweise nach einer Reihe von zwei oder drei, kurzen Tastungen pro Zeiteinheit den momentanen Laststromwert als Standardwert in den Speicher übernimmt.

Zu unterscheiden ist zwischen dem eingeschalteten und dem ausgeschalteten Zustand des Stellgerätes bei Beginn der kurzen Tastungen. Es ist vorgesehen die Funktionseinheit so aufzubauen, daß sie bei ausgeschaltetem Stellgerät nach einer Reihe von 2 + n (n = 0 bis x), vorzugsweise nach einer Reihe von zwei oder drei kurzen Tastungen pro Zeiteinheit den hierfür im Speicher abgelegten Laststromwert einstellt. Anstelle des Ausund Einschaltzustandes als Unterscheidungskriterium ist es aber auch möglich das zeitlich kurze Aufeinanderfolgen von einem langen Tastimpuls und sich anschließenden mehreren kurzen Tastimpulsen als Entscheidungskriterium für die Übernahme eines eingestellten Laststromwwertes in den Speicher heranzuziehen.

Das erfindungsgemäße Prinzip des schnellen Einstellens bestimmter Laststromwerte läßt sich in verschiedenen Varianten realisieren. Bei einer dieser weist die Funktionseinheit eingangsseitig neben einem zugehörigen ersten Taster noch einen Anschluß für einen zweiten Taster auf. Dieser gehört zu einer netzgebundenen Fernsteuereinrichtung und ist über eine Anpaßschaltung angeschlossen. Ausgangsseitig ist die Funktionseinheit mit einer Steuerelektronik verbunden, die mit einer Spannungsquelle und einer Last in Reihe liegt und den Laststrom steuert.

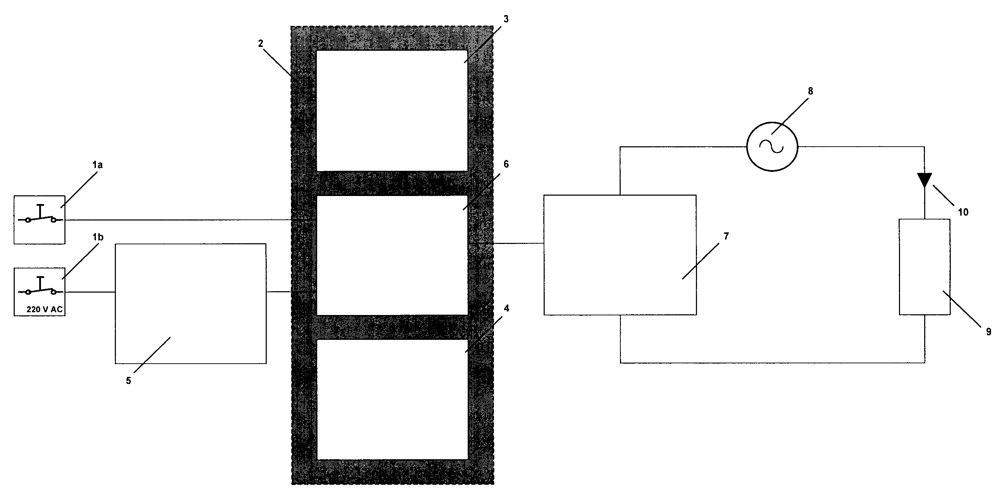

Ein Ausführungsbeispiel der Erfindung ist in der einzigen Zeichnung als Blockschaltbild dargestellt und wird im folgenden näher beschrieben.

Mit Hilfe von Tastern 1 ist es einem Bediener des Stellgerätes möglich, entweder schnell aufeinander folgende kurze Tastungen auszuführen, die zu einer entsprechenden Reihe von einzelnen kurzen Schaltimpulsen führen, oder den Taster längere Zeit geschlossen zu halten. Eine Funktionseinheit 2 mit einem Impulsauswerter 6 ermöglicht eine Unterscheidung zwischen kurzen und langen Schaltimpulsen und kann diese in unterschiedlicher Weise bewerten und dieser Bewertung entsprechend auf eine nachgeschaltete Steuerelektronik 7 einwirken, die ihrerseits in einem gesteuerten Lastkreis mit einer Spannungsquelle 8 und einer Last 9 einen bestimmten Laststrom 10 einstellt.

Üblicher Weise wird ein einzelner kurzer Impuls von dem Impulsauswerter 6 so interpretiert, daß ein ausgeschaltetes Steuergerät einzuschalten und ein eingeschaltetes Steuergerät auszuschalten ist. Bei längeren Tastungen, deren Tastzeit die Dauer der kurzen Tastungen deutlich überschreiten, bewirkt die Funktionseinheit 2 eine Änderung des Laststromes im Sinne einer fortschreitenden Vergrößerung oder Verkleinerung, wobei an den Wendepunkten bei Null und Maximum des Laststromwertes die Änderungsten denz von größer auf kleiner oder umgekehrt wechselt. Es wird auf diese Weise der gesamte Stellbereich des Stellgerätes durchlaufen, so daß bei Erreichen des gewünschten Laststromwertes nur die Taste losgelassen werden muß, um bei der gerade gefundenen Einstellung zu verbleiben.

Erfindungsgemäß ist die Funktionseinheit 2 so aufgebaut, daß sie die Zahl der pro Zeiteinheit erfaßten kurzen Tastimpulse ermitteln kann und daß dieser Zahl ein bestimmter Laststromwert zugeordnet ist, der von der Steuerelektronik 7 eingestellt wird. Die Funktionseinheit 2 besitzt einen Speicher 4, in dem festgehalten ist, welcher Laststromwert einer bestimmten Zahl von kurzen Tastimpulsen zugeordnet ist. Es kann z. B. festgelegt werden, daß die Steuerelektronik 7 den höchsten Laststrom und damit die größte Helligkeit einer Beleuchtungseinrichtung einstellt, wenn der Impulsauswerter 6 eine Zahl von zwei aufeinanderfolgenden kurzen Tastimpulsen erfaßt hat. Anstelle des höchsten Laststromwertes könnte selbstverständlich auch ein beliebiger anderer Wert treten.

Die jeweils von der Steuerelektronik 7 einzustellenden Laststromwerte können schon bei der Herstellung des Steuergerätes dem Speicher 4 fest vorgegeben werden. Bedienerfreundlicher ist es allerdings, wenn ein oder gar mehrere Laststromwerte, die häufig gewünscht werden, individuell vom Bediener festgelegt werden können. Hierzu besitzt die Funktionseinheit 2 eine Programmiereinrichtung 3, die es ermöglicht einen bestimmten, auf übliche Weise eingestellten Laststromwert im Speicher 4 zu fixieren. Nach dem Einstellen eines bevorzugten Standardwertes kann die Programmiereinrichtung 3 z. B. durch 3 kurze Tastimpulse zur Übernahme des eingestellten Laststromwertes in den Speicher 4 aktiviert werden.

Das Aufrufen der im Speicher 4 festgehaltenen Laststromwerte zum Einstellen durch die Steuerelektronik 7 erfolgt vorzugsweise mit der gleichen Zahl von kurzen Tastimpulsen mit der auch die Speicherung dieses Laststromwertes veranlaßt wurde. Als Unterscheidungskriterium dafür, ob die Speicherung eines neuen Laststromwertes oder die Ausgabe eines gespeicherten Laststromwertes erfolgen soll, kann der Ein- bzw. Ausschaltzustand des Stellgerätes herangezogen werden. Alternativ besteht auch die Möglichkeit, daß der Impulsauswerter 6 feststellt, ob unmittelbar vor den kurzen Tastimpulsen eine lange Tastung erfolgte. In diesem Fall würde der zuletzt eingestellte Laststromwert in den Speicher übernommen.

Ein konkret ausgeführter elektronischer Dimmer könnte wie folgt bedienbar sein:

| ***Ausgangszustand*** | ***Bedienungeingabe*** | ***Dimmerreaktion*** |
|---|---|---|
| Dimmer AUS | Taster 1X kurz tippen | Dimmer schaltet mit demzuletzt eingeschalteten Wert ein. |
| | Taster 2x kurz tippen | Dimmer schaltet den höchsten Wert ein (max. Helligkeit). |
| | Taster 3x kurz tippen | Dimmer schaltet einen programmierten Standardwert ein. |

| ***Ausgangszustand*** | ***Bedienungeingabe*** | ***Dimmerreaktion*** |
|---|---|---|
| Dimmer AN | Taster 1x kurz tippen | Dimmer schaltet aus |
| | Taster länger Betätigen | Dimmer verändert abhängig von der Betätigungszeit seinen Wert. |
| | Taster 2x kurz tippen | Dimmer springt auf den höchsten Wert. |
| | Taster 3x kurz tippen | der momentan eingestellte Wert wird als Standardwert gespeichert. |

Außer einem direkt mit der Funktionseinheit 2 verbundenen erster Taster 1a ist eingangsseitig noch ein zweiter Taster 1b vorgesehen, der in eine netzgebundene Fernsteueranlage integriert ist. Die hier erzeugten Tastimpulse müssen mit Hilfe einer Anpaßschaltung 5 an das Spannungsniveau der Logikpegel der Funktionseinheit 2 angepaßt werden.

### Bezugszeichenliste

Taster (1)
erster Taster (1a)
zweiter Taster (1b)
Funktionseinheit (2)
Programmiereinrichtung (3)
Speicher (4)
Anpaßschaltung (5)
Impulsauswerter (6)
Steuerelektronik (7)
Spannungsquelle (8)
Last (9)
Laststrom (10)

## Patentansprüche

1. Elektronisches Stellgerät zum Steuern eines Laststromes, insbesondere Dimmer zum Einstellen der Helligkeit von Beleuchtungseinrichtungen oder Drehzahlsteller für Elektromotoren, mit einer Funktionseinheit (2), die über einen Taster (1) bedienbar ist und entsprechend der Art der Betätigung des Tasters (1) und den hierdurch erzeugten Tastimpulsen ein bestimmtes Schaltverhalten vorgibt, wobei sie im ausgeschalteten Zustand des Stellgerätes einen durch eine kurze Tastung erzeugten kurzen Tastimpuls so bewertet, daß sie mit Hilfe einer Steuerelektronik (7) den Laststrom (10) auf den vor seinem Abschalten eingestellten Wert einstellt und eine entsprechend länger anhaltende Tastung so bewertet, daß sie eine fortlaufende Änderung der Größe des Laststromwertes im Sinne einer Verkleinerung oder Vergrößerung des momentan eingestellten Laststromwertes bewirkt und hierbei der Stellbereich des Stellgerätes bis zur Beendigung der Tastung durchlaufen wird, dadurch gekennzeichnet, daß die Funktionseinheit (2) so aufgebaut ist, daß sie zunächst die Zahl der pro Zeiteinheit ausgeführten kurzen Tastimpulse erfaßt und einer bestimmten Zahl von kurzen Tastimpulsen einen bestimmten Laststromwert zuordnet und erst dann der Steuerelektronik das hieraus resultierende Schaltverhalten vorgibt.

2. Elektronisches Stellgerät nach Anspruch 1, dadurch gekennzeichnet, daß die Funktionseinheit (2) zwei kurze Tastimpulse pro Zeiteinheit so bewertet, daß sie daraufhin je nach Vorgabe den höchsten Laststrom (10) oder einen vorgegebenen Standardwert einstellt.

3. Elektronisches Stellgerät nach einem der vorhergehenden Ansprüche, dadurch gekennzeichnet, daß die Funktionseinheit (2) eine Reihe von 3 + n (n = 0 bis x) kurzen Tastimpulsen pro Zeiteinheit so bewertet, daß sie daraufhin einen von 1 + n (n = 0 bis x) vorgegebenen Standardwerten des Laststromes (10) einstellt.

4. Elektronisches Stellgerät nach einem der vorhergehenden Ansprüche 2 und 3, dadurch gekennzeichnet, daß die Funktionseinheit (2) mit einer Programmiereinrichtung (3) versehen ist, die eine individuelle Vorgabe mindestens eines Standardwertes des Laststromes (10) ermöglicht.

5. Elektronisches Stellgerät nach einem der vorhergehenden Ansprüche, dadurch gekennzeichnet, daß die Funktionseinheit (2) mit einem Speicher (4) zur Speicherung mindestens eines reproduzierbaren Laststromwertes versehen ist.

6. Elektronisches Stellgerät nach Anspruch 5, dadurch gekennzeichnet, daß zur Vorgabe eines der 1 + n (n = 0 bis x) Standardwerte des Laststromes (10) im Speicher, zunächst in üblicher Weise ein bestimmter Wert des Laststromes (10) über die Dauer einer entsprechend lange anhaltenden Tastschaltzeit eingestellt wird und anschließend eine Auslösung der Programmiereinrichtung (3) diesen Laststromwert im Speicher (4) fixiert.

7. Elektronisches Stellgerät nach Anspruch 6, dadurch gekennzeichnet, daß zur Auslösung der Programmiereinrichtung (3) ein zweiter Taster (1b) dient, der zum Abspeichern betätigt wird.

8. Elektronisches Stellgerät nach Anspruch 6, dadurch gekennzeichnet, daß zur Auslösung der Programmiereinrichtung (3) diese so aufgebaut ist, daß sie bei eingeschaltetem Stellgerät nach einer Reihe von 2 + n (n = 0 bis x), vorzugsweise nach einer Reihe von zwei oder drei, kurzen Tastimpulsen pro Zeiteinheit den momentanen Laststromwert als Standardwert in den Speicher übernimmt.

9. Elektronisches Stellgerät nach Anspruch 8, dadurch gekennzeichnet, daß die Funktionseinheit (2) so aufgebaut ist, daß sie bei ausgeschaltetem Stellgerät nach einer Reihe von 2 + n (n = 0 bis x), vorzugsweise nach einer Reihe von zwei oder drei kurzen Tastimpulsen pro Zeiteinheit den hierfür im Speicher (4) abgelegten Laststromwert einstellt.

10. Elektronisches Stellgerät nach Anspruch 6, dadurch gekennzeichnet, daß zur Auslösung der Programmiereinrichtung (3) diese so aufgebaut ist, daß sie bei eingeschaltetem Stellgerät nach einer Reihe von 2 + n (n = 0 bis x), vorzugsweise nach einer Reihe von zwei oder drei, kurzen Tastimpulsen pro Zeiteinheit, die unmittelbar auf eine lange Tastung folgen, den momentanen Laststromwert als Standardwert in den Speicher übernimmt.

11. Elektronisches Stellgerät nach Anspruch 10, dadurch gekennzeichnet, daß die Funktionseinheit (2) so aufgebaut ist, daß sie bei ausgeschaltetem oder eingeschaltetem Stellgerät nach einer Reihe von 2 + n (n = 0 bis x), vorzugsweise nach einer Reihe von zwei oder drei kurzen Tastimpulsen pro Zeiteinheit den hierfür im Speicher (4) abgelegten Laststromwert einstellt.

12. Elektronisches Stellgerät nach einem der vorhergehenden Ansprüche, dadurch gekennzeichnet, daß die Funktionseinheit (2) eingangsseitig neben einem zugehörigen ersten Taster (1a) noch einen Anschluß für einen zweiten Taster (1b) aufweist, der zu einer netzgebundenen Fernsteuereinrichtung gehört und über eine Anpaßschaltung (5) angeschlossen ist, und daß die Funktionseinheit ausgangsseitig mit einer Steuerelektronik (7) verbunden ist, die mit einer Spannungsquelle (8) und einer Last (9) in Reihe liegt und den Laststrom (10) steuert.
